# FASCICULE DE BREVET EUROPEEN

(11) **EP 4 140 291 B1**
(45) Date de publication et mention de la délivrance du brevet: **25.02.2026**
(21) Numéro de dépôt: 22191636.4
(22) Date de dépôt: 23.08.2022
(51) Int. Cl.: A01G 25/09

(54) **DISPOSITIF D'IRRIGATION AUTOMOBILE POUR TERRAINS AGRICOLES**
SELBSTFAHRENDE BEWÄSSERUNGSVORRICHTUNG FÜR LANDWIRTSCHAFTLICHE FLÄCHEN
MOTOR VEHICLE IRRIGATION DEVICE FOR AGRICULTURAL PLOTS

(30) Priorité: 24.08.2021 FR 2108855
(43) Date de publication de la demande: 01.03.2023
(73) Titulaire: Osiris Agriculture, 59480 Illies (FR)
(72) Inventeur: DESESQUELLES, Henri, 60420 FERRIERES (FR); COCKENPOT, Rodolphe, 62138 DOUVRIN (FR); GUYARD, Léon, 51270 COIZARD-JOCHES (FR)
(74) Mandataire: IP Trust

(56) Documents cités:
- GB-A- 2 103 462
- US-A- 4 522 338
- US-A1- 2020 288 654

## Description

### DOMAINE TECHNIQUE DE L'INVENTION

La présente invention concerne un dispositif d'irrigation automobile destiné aux terrains agricoles. Elle concerne en outre un procédé d'irrigation utilisant ledit dispositif.

### ETAT DE LA TECHNIQUE

L'irrigation est une étape primordiale pour les cultures agricoles. Différents dispositifs existent dont des systèmes immobiles et automobiles.

Les systèmes immobiles prévoient des arroseurs branchés directement sur une source d'eau en partie enterrée le long d'un champ ou branchés à la source d'eau par l'intermédiaire d'un tuyau permettant de déporter l'arroseur par rapport à la source d'eau. Selon la seconde variante, le tuyau peut être stocké sur un enrouleur monté sur un chariot sans moyen de propulsion, en particulier sans moteur.

Or ces systèmes nécessitent d'être déplacés par l'agriculteur le long d'un champ ou dans le champ sur chaque partie du champ considéré afin d'irriguer l'ensemble de la superficie dudit champ. Ces opérations sont chronophages pour les agriculteurs. En outre, ce procédé d'irrigation peut avoir comme inconvénient une surconsommation d'eau localement.

Il est connu des chariots d'irrigation comprenant un moteur d'enrouleur. Comme la version moteur, le tuyau dudit chariot doit être branché à la source, puis l'utilisateur doit pousser ou tirer le chariot jusqu'à une zone à irriguer, le tuyau présentant une direction rectiligne entre la source d'eau et le chariot et étant disposé entre les roues du chariot au niveau de l'enrouleur. En phase d'irrigation, le moteur d'enrouleur est automatiquement actionné afin d'enrouler le tuyau et simultanément rapprocher le chariot d'irrigation de la source d'eau. Ce type de chariot d'irrigation permet d'irriguer plusieurs zones se trouvant le long d'une trajectoire rectiligne. L'utilisateur doit ensuite de nouveau pousser ou tirer le chariot le long d'une nouvelle trajectoire rectiligne afin d'irriguer les zones adjacentes et redémarrer manuellement le moteur d'enrouleur.

On connaît également des systèmes d'irrigation automobiles parcourant de manière autonome des champs agricoles en étant raccordés (en fonctionnement) en permanence avec une source d'eau, par exemple une borne ou une vanne. Un tuyau d'alimentation est relié entre la source d'eau et le système d'irrigation. Le système comprend un châssis automobile qui porte une bobine s'étendant selon un axe horizontal agencée pour stocker le tuyau d'alimentation et permettre d'une part son déroulement sur le sol du champ lors de l'éloignement relativement à la source d'eau, et d'autre part son enroulement lors du rapprochement relativement à la source d'eau. La bobine est placée au centre du châssis. En outre ce type de système peut comprendre un moyen de guidage du tuyau disposé sous le châssis et entre les roues arrière dudit système de sorte que le tuyau d'alimentation en eau se trouve derrière le châssis du système. Ce type de système comprend en outre une flèche s'étendant transversalement à la direction de déplacement et de part et d'autre du châssis de manière équidistante ou de manière symétrique par rapport au châssis. La flèche porte des moyens de distribution d'eau de manière à déposer de l'eau dans les sillons du champ agricole se trouvant en-dessous de la flèche. En fonctionnement, ce système parcourt le même chemin à l'aller, lors du déroulement dudit tuyau en s'éloignant de la source d'eau, et au retour, lors de l'enroulement du tuyau en se rapprochant de la source d'eau.

Bien que satisfaisant, ce système a pour inconvénient un double passage, un à l'aller et un au retour, des roues dans les mêmes sillons, ce qui peut engendrer un endommagement des plantations ou cultures du champ irrigué.

En outre, selon la configuration du champ à irriguer, par exemple la direction des sillons, et/ou le nombre de source d'eau d'une part et/ou le placement de la ou des sources d'eau d'autre part, l'agriculteur doit débrancher le tuyau d'alimentation de la source d'eau, déplacer ledit système et raccorder à nouveau le tuyau d'alimentation à une source d'eau.

Les documents US 4 522 338 A, GB 2 103 462 A et US 2020/288654 A1 divulguent des systèmes d'irrigation mobiles de l'état de la technique.

L'invention vise à remédier à ces problèmes en proposant un dispositif d'irrigation automobile limitant les endommagements des cultures et en limitant la durée d'irrigation par rapport aux systèmes connus de l'art antérieur.

### OBJET DE L'INVENTION

A cet effet, et selon un premier aspect, l'invention propose un dispositif d'irrigation automobile pour parcourir un terrain agricole depuis une source d'eau fixe, tel que défini dans la revendication 1.

Le dispositif d'irrigation selon l'invention permet d'irriguer un champ sans procéder à des aller-retours et donc de parcourir deux fois le même chemin. Il limite les risques d'endommager les cultures. En outre, en réalisant un demi-tour au bout du premier chemin correspondant à l'aller, et de réaliser un retour en passant par un deuxième chemin, le dispositif permet de diminuer le temps nécessaire à l'irrigation d'un terrain agricole par rapport aux dispositifs de l'art antérieur.

Pour ce qui précède et pour la suite de la description, on entend par :
- latéral, au regard d'une pièce, une direction, une face, un côté, une zone ou étendue faisant saillie sensiblement radialement selon un débattement angulaire de 180 degrés horizontalement et/ou verticalement, bornes extrêmes (0 et 180 degrés exclues) par rapport au point considéré, telle une demi-sphère, par exemple horizontalement ou perpendiculairement par rapport à un plan vertical parallèle à la direction de déplacement du dispositif ;
- porte-à-faux, une partie qui est au-dessus du vide, c'est-à-dire sans support immédiat, ou du moins continue, en dessous de ladite partie ;
- eau, l'eau disponible en sortie de source, de borne ou de vanne installée dans ou en bordure de terrain agricole, ladite eau pouvant être potable ou non ; en outre en combinaison avec un système ou une armature de distribution d'eau, on entend par eau, l'eau prélevée et acheminée via le tuyau d'alimentation ou ladite eau mélangée à des produits ou des solutions, par exemple favorisant la croissance des cultures ou limitant l'apparition de nuisibles ;
- moyens de déplacement, les moyens permettant de porter et/ou déplacer l'ensemble du dispositif d'irrigation ;
- demi-tour, l'action de réaliser une trajectoire d'un débattement angulaire de 180 degrés, selon n'importe quel rayon de courbure, autour d'un point fixe.
- dans le cas de moyens de déplacement comprenant des roues, l'extrémité distale du bras de déport se situe en porte-à-faux latéral des faces extérieures des roues d'un côté latéral du dispositif d'irrigation.

Le bras de déport permet de déporter ou de décaler latéralement le tuyau d'alimentation par rapport au châssis et/ou aux moyens de déplacement dudit dispositif. Le bras de déport permet de déposer le tuyau d'alimentation au-delà de la largeur du châssis ou au-delà de la voie des moyens de déplacement ou au-delà de la surface balayée entre les moyens de déplacement. Selon des variantes de réalisation, le bras de déport permet de déposer le tuyau d'alimentation au-delà du système de distribution d'eau, ou à l'aplomb de l'extrémité distale du système de distribution d'eau lorsque celui-ci présente la forme d'une flèche. Selon l'invention, le bras de déport est incliné depuis le châssis vers le sol.

Par exemple, l'extrémité distale du bras de déport se situe à mi-hauteur par rapport à la hauteur de l'extrémité proximale reliée au châssis, ladite hauteur étant définie par la distance entre le point d'application d'un moyen de déplacement sur le sol d'une part, et le point de raccordement de l'extrémité proximale sur le châssis d'autre part, les mesures de distances étant réalisées sur un sol plat.

Selon un mode de réalisation, l'extrémité proximale du bras de déport peut se situer à une hauteur comprise entre 1 mètre et 3 mètres du sol. L'extrémité distale du bras de déport peut se situer à une hauteur comprise entre 50 centimètres et 1,5 mètre.

Selon encore un autre exemple, le bras de déport est un élément fixe par rapport au châssis.

Selon en outre un autre exemple, le bras éléments de déport est un élément présentant une forme en arc de cercle.

Selon un mode de réalisation, le bras de déport fait saillie latéralement depuis le châssis et comprend au moins un segment articulé par rapport au châssis, chaque segment comprenant au moins un cadre délimitant un espace dans lequel est inséré le tuyau d'alimentation.

Selon un autre mode de réalisation le bras de déport fait saillie latéralement depuis le châssis et comprend un segment fixe relié et faisant saillie latéralement au châssis et au moins un segment articulé par rapport au segment fixe, chaque segment comprenant au moins un cadre délimitant un espace dans lequel est inséré le tuyau d'alimentation.

La présence d'au moins un segment articulé permet de déporté ou décalé latéralement le tuyau d'alimentation par rapport au châssis et/ou aux moyens de déplacement dudit dispositif et de guider la partie du tuyau d'alimentation entre l'enrouleur et l'extrémité distale du bras de déport. Par exemple, la partie de tuyau entre l'enrouleur et l'extrémité distale du bras de déport présente un rayon de courbure au moins égal au rayon de courbure du cylindre de réception de l'enrouleur.

Par exemple, le bras de support comprend un segment fixe et trois segments articulés reliés l'un après l'autre.

De préférence selon n'importe quel mode de réalisation, chaque cadre comprend au moins un rouleau monté libre en rotation.

Par exemple, chaque côté de cadre comprend un rouleau monté libre en rotation. Selon un autre exemple, chaque cadre comprend quatre rouleaux montés libres en rotation.

Le système de distribution d'eau permet de distribuer l'eau aux cultures, par exemple par aspersion au-dessus des feuilles des cultures, et/ou par distribution au niveau du sol du terrain agricole. Selon un mode de réalisation, la pression hydraulique est fournie par la source d'eau. De manière complémentaire ou alternative, le système de distribution peut comprend en outre une pompe.

Selon un mode de réalisation, le système de distribution d'eau est une armature de distribution d'eau s'étendant de chaque côté latéral du châssis, l'armature présentant deux extrémités distales d'armature de manière que chaque extrémité distale de l'armature se situent à une distance non-nulle, dite distance d'armature, du châssis. L'élément de déport fait saillie du châssis et s'étend latéralement d'un côté du châssis de manière que l'extrémité distale dudit élément de déport se situe à une distance supérieure ou égale par rapport à la distance d'armature.

Selon un autre mode de réalisation, le système de distribution d'eau est une armature de distribution d'eau s'étendant de chaque côté latéral du châssis, l'armature comprenant deux sections d'armature, une première section et une deuxième section, chaque section présentant une extrémité distale d'armature située à une distance non-nulle du châssis. De préférence, la distance de l'extrémité distale de la première section par rapport au châssis, dite distance de première section, est inférieure à la distance de l'extrémité distale de la deuxième section par rapport au châssis. L'élément de déport fait saillie du châssis et s'étend latéralement d'un côté du châssis présentant la première section de l'armature et de manière que l'extrémité distale dudit élément de déport se situe à une distance supérieure ou égale par rapport à la distance de première section. Ce mode de réalisation permet notamment de favoriser l'équilibrage du dispositif.

Selon les deux précédents modes de réalisation, l'armature de distribution d'eau s'étend de part et d'autre du châssis et en porte-à-faux du châssis et/ou des moyens de déplacement.

Selon les deux précédents modes de réalisation, le bras de déport présente respectivement une longueur au moins égale à la distance d'armature ou la distance de première section d'armature.

Selon un autre mode de réalisation, le système de distribution d'eau est une armature de distribution d'eau s'étendant au moins d'un côté latéral du châssis, l'armature présentant une extrémité distale d'armature se situant à une distance non-nulle du châssis. Par exemple, l'armature de distribution peut comprendre une seule section d'armature s'étendant d'un seul côté latéral du châssis de support. Le bras de déport peut s'étendre du même côté que celui de l'armature de distribution, ou peut s'étendre du côté opposé à celui de l'armature de distribution.

De préférence, l'armature de distribution d'eau comprend au moins un conduit de distribution d'eau et s'étend le long de ladite armature. Ledit au moins un conduit est raccordé au tuyau d'alimentation.

Selon un exemple de réalisation, l'armature de distribution comprend des trous d'aspersion espacés les uns des autres.

Selon un mode de réalisation, l'armature de distribution d'eau comprend des extensions verticales espacées les unes des autres, lesdites extensions étant agencées pour déposer l'eau à quelques centimètres du sol ou directement sur le sol. Par exemple, les extensions verticales présentent une longueur inférieure ou égale à la hauteur de l'armature par rapport au sol. De préférence, les extensions verticales sont espacées les unes des autres d'une longueur égale à l'écartement des sillons du terrain agricole. Les extensions verticales peuvent en outre être fixes ou mobiles par rapport à l'armature de distribution. Selon une variante de réalisation, les extrémités des extensions verticales peuvent comprendre des roulettes agencées pour être en contact avec le sol de manière à soutenir l'armature de distribution.

De manière préférentielle, l'armature de distribution d'eau s'étend perpendiculairement au châssis et/ou perpendiculairement à la direction de déplacement.

Par exemple, l'armature de distribution est du type flèche et/ou du type formant un treillis.

Selon un mode de réalisation, le dispositif d'irrigation peut comprendre en outre au moins un réservoir de produits ou de solutions, par exemple favorisant la croissance des cultures ou limitant l'apparition de nuisibles. Par exemple, le dispositif peut comprendre un réservoir par produit ou solution de traitement. Chaque réservoir peut être relié à l'au moins un conduit de distribution pour traiter plusieurs sillons à la fois, ou être relié à chaque trou ou extension verticale pour traiter un ou plusieurs sillons déterminés. Des vannes, raccords, et éventuellement pompes de types connus peuvent être utilisés pour le raccordement de l'au moins un réservoir.

De manière optionnelle, le bras de déport comprend un élément de soutien disposé entre les extrémités proximale et distale et prenant appui au sol. Par exemple, l'élément de soutien comprend une roue de soutien dont l'axe de rotation est raccordé au milieu du bras de support via une jambe de soutien. L'élément de soutien n'est pas un moyen de déplacement.

Selon une variante de réalisation, au moins une extrémité distale d'armature comprend une butée de bras de déport. Par exemple une extrémité distale de la première section comprend une butée de bras de déport.

En particulier la butée réalise un arrêt en position de l'extrémité distale du bras de déport.

De préférence, l'enrouleur présente un axe vertical. L'enrouleur présente un axe d'enroulement vertical.

Par exemple, les moyens de déroulement et d'enroulement comprennent un moteur relié à l'arbre de rotation de l'enrouleur. Par exemple, le moteur est un moteur électrique.

Selon un mode de réalisation, les moyens de déplacement comprennent au moins trois roues, ou au moins deux chenilles, des moyens de propulsion et de direction, des moyens de contrôle indépendant de la propulsion et de la direction afin de maintenir, en utilisation, une trajectoire prédéterminée. Selon un autre mode de réalisation, les moyens de déplacement comprennent des chenilles.

Ces moyens permettent au dispositif d'irrigation d'être autopropulsé et autonome.

Par exemple, les moyens de propulsion sont des moteurs électriques, de préférence disposés respectivement sur les arbres de roue.

De préférence, le dispositif d'irrigation comprend des batteries permettant de stocker une quantité d'énergie électrique, lui donnant une autonomie de quelques heures.

Selon un mode de réalisation, le dispositif comprend en outre un système générateur d'électricité agencé pour recharger les batteries.

Selon un premier exemple, le système générateur d'électricité comprend une turbine et un alternateur. La turbine peut être reliée au circuit d'alimentation ou de distribution de l'eau, d'une manière connue de la personne du métier. Le système de turbine/alternateur permet de recharger les batteries du dispositif lors de l'irrigation. L'eau sous pression fait tourner la turbine qui est reliée à l'alternateur avec un système de transmission mécanique, de préférence un système de poulies courroies. L'alternateur recharge les batteries en continue de façon que le dispositif ne manque jamais d'électricité.

Selon un deuxième exemple, le système générateur d'électricité comprend un moteur thermique et un alternateur. Le système de moteur thermique/alternateur permet de recharger les batteries du dispositif lors de son utilisation, en particulier lors de son déplacement. Le moteur thermique fait tourner un système de conversion mécanique, de préférence un système de poulies courroies relié à l'alternateur. L'alternateur recharge les batteries en continue de façon que le dispositif ne manque jamais d'électricité.

Dans les deux cas, l'alternateur est le même.

Selon un mode de réalisation, le dispositif d'irrigation comprend un système générateur d'électricité comprenant au moins une turbine, au moins un moteur thermique, un alternateur, et un système de transmission de rotation entre l'au moins une turbine, l'au moins un moteur thermique et l'alternateur, de manière à recharger les batteries lors du déplacement et lors de la distribution d'eau.

De préférence, le système de transmission de rotation est un système de poulies courroies commun comprenant au moins une poulie de turbine, au moins une poulie de moteur, au moins deux poulies d'alternateur, au moins une première poulie d'alternateur étant reliée à au moins une poulie de turbine et au moins une deuxième poulie d'alternateur étant reliée à au moins une poulie de moteur, chaque poulie d'alternateur étant montée sur l'arbre d'alternateur, le système de transmission comprenant en outre au moins un système d'accouplement sélectif des au moins deux poulies d'alternateur de manière que l'au moins une première poulie d'alternateur ou l'au moins une deuxième poulie d'alternateur soit agencée pour entraîner en rotation l'alternateur. Par exemple, lors du fonctionnement de la turbine, la poulie d'alternateur associée entraîne en rotation l'arbre de l'alternateur, alors que la poulie d'alternateur associée au moteur thermique sera en roue libre au regard de l'arbre d'alternateur.

De préférence, chaque poulie d'alternateur est une poulie débrayable ou dite roue libre. Ce type de poulie est connue dans le domaine automobile.

De préférence, la trajectoire prédéterminée est une trajectoire rectiligne ou suivant les sillons du terrain agricole.

Selon un mode de réalisation, les moyens de contrôle comprennent des capteurs afin de détecter la position du dispositif par rapport à son environnement et/ou la position de l'enrouleur et/ou la position du bras de déport, lorsqu'il est mobile, et/ou la position des roues.

Selon une variante de réalisation, le dispositif comprend au moins un capteur de terrain agencé pour mesurer l'état du terrain agricole ou détecter des anomalies dans lequel il se trouve, en particulier sur l'état des cultures et/ou la présence de nuisibles, par exemple la présence de champignons ou d'animaux nuisibles. De préférence, il est détecté la présence ou l'absence d'humidité, de ravageur, de maladie(s), de stress hydrique, de carence en engrais. La base roulante permet d'acquérir des données journalières sur l'état du champ et d'agir si besoin.

Selon un mode de réalisation, le ou lesdits capteurs sont des capteurs optiques. De préférence, lesdits capteurs sont disposés à l'avant ou sur une face frontale du dispositif d'irrigation. Les capteurs peuvent avoir différentes formes (dont optiques). Les capteurs peuvent être à l'avant du robot mais aussi le long de la rampe.

De manière optionnelle, le dispositif d'irrigation peut comprendre un système de trancanage pour guider l'enroulement ou le déroulement du tuyau d'alimentation.

Selon un deuxième aspect, l'invention propose un procédé d'irrigation d'un terrain agricole tel que défini dans la revendication 13.

Au départ, le tuyau d'alimentation est raccordé à la source d'eau fixe. Le dispositif d'irrigation automobile peut ensuite commencer un premier circuit comprenant le premier chemin, dit aller, le demi-tour et le deuxième chemin, dit retour, comme énoncé au-dessus de manière à balayer ou couvrir une première partie ou superficie d'un terrain agricole.

Ces étapes sont répétées de manière à irriguer toutes les parties et ainsi la superficie totale dudit terrain agricole.

De préférence, l'irrigation est stoppée lors du demi-tour.

Selon une variante de réalisation, le dispositif d'irrigation est arrêté à la moitié du demi-tour, de préférence selon une direction perpendiculaire à la première direction de déplacement. Le dispositif peut avancer et reculer de manière à irriguer les zones d'extrémité du terrain agricole, dites fourrières. Ensuite, le dispositif peut terminer le demi-tour pour se diriger vers la deuxième direction de déplacement.

De préférence, le procédé peut prévoir en outre de mesurer ou détecter l'état du terrain agricole, en particulier l'état des cultures et/ou la présence de nuisibles, via au moins un capteur de terrain, et distribuer au moins un produit ou au moins une solution de traitement système de distribution d'eau lors du déplacement.

Les moyens de contrôle permettent d'enregistrer les mesures et la position dans le terrain agricole de manière à cartographier l'état dudit terrain. Par exemple, les moyens de contrôle permettent d'agir en temps réel lors de la détection d'une anomalie ou d'enregistrer les anomalies et la position de manière à agir au prochain passage. Le dispositif d'irrigation permet d'automatiser la distribution d'eau et d'eau chargée de produit(s) ou solution(s) de traitement.

### BREVE DESCRIPTION DES FIGURES

D'autres caractéristiques et avantages de l'invention ressortiront de la description détaillée de l'invention qui va suivre en référence aux figures annexées et dans lesquelles :
[Fig. 1] La figure 1 est une vue de face d'un dispositif d'irrigation automobile selon un mode de réalisation de l'invention ;
[Fig. 2] La figure 2 est une vue agrandie de dessus d'un dispositif d'irrigation automobile conforme à la figure 1, montrant en particulier un bras de déport dont l'extrémité distale est en contact avec l'extrémité distale d'une première section d'un système de distribution d'eau, une deuxième section du système de distribution d'eau n'étant pas visible ;
[Fig. 3] La figure 3 est une vue en perspective d'un dispositif d'irrigation automobile conforme à la figure 2 ;
[Fig. 4] La figure 4 est une vue en perspective d'un dispositif d'irrigation automobile conforme à la figure 2, le tuyau d'alimentation n'étant pas visible sur le bras de déport ;
[Fig. 5] La figure 5 représente de manière schématique un procédé d'irrigation utilisant un dispositif d'irrigation automobile selon un mode de réalisation ;
[Fig. 6] La figure 6 est une vue en perspective d'un système générateur d'électricité selon un mode de réalisation pour un dispositif d'irrigation automobile ;
[Fig. 7] La figure 7 est une vue en perspective d'un système générateur d'électricité conforme à la figure 6.

Pour plus de clarté, les éléments identiques ou similaires des différents modes de réalisation sont repérés par des signes de référence identiques sur l'ensemble des figures.

### DESCRIPTION DETAILLEE DE L'INVENTION

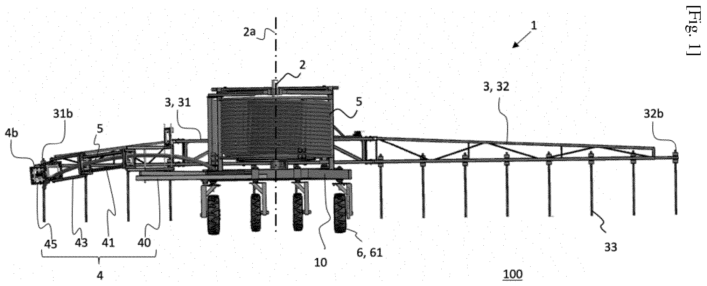

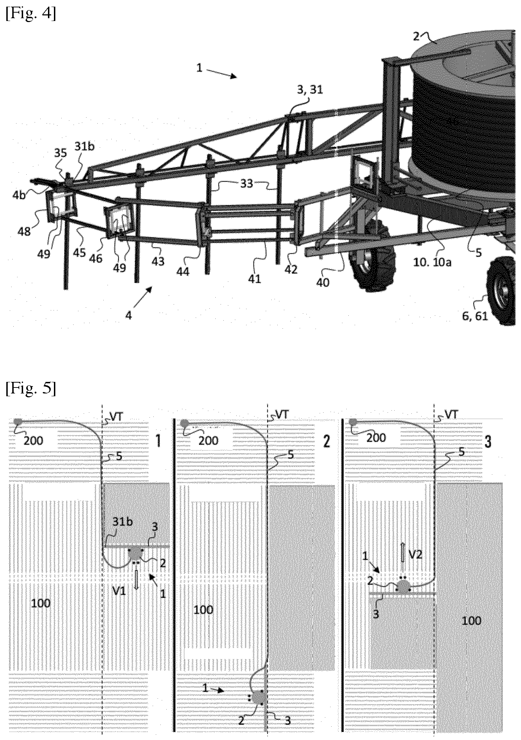

En relation avec les figures 1 à 5, il est décrit un dispositif d'irrigation automobile 1 agencé pour parcourir un terrain agricole 100, depuis une source d'eau fixe 200 (voir figure 5) placée sur ou en bordure dudit terrain, et pour délivrer ou arroser l'eau prélevée de ladite source sur le terrain agricole.

Le dispositif d'irrigation automobile 1 comprend :
- un châssis 10 de support,
- des moyens de déplacement 6 reliés au châssis 10 pour déplacer ledit dispositif sur le terrain agricole selon une direction de déplacement,
- un système de distribution d'eau 3 pour distribuer de l'eau sur le sol du terrain agricole,
- un tuyau d'alimentation 5 raccordant la source d'eau fixe (voir figure 5) au système de distribution,
- un enrouleur 2 disposé sur le châssis 10, l'enrouleur étant agencé pour recevoir et stocker le tuyau d'alimentation,
- des moyens de déroulement et d'enroulement (non visibles sur les figures) reliés à l'enrouleur de manière à dérouler ledit tuyau lors d'un éloignement de la source d'eau et à l'enrouler lors d'un rapprochement de la source d'eau,
- un bras de déport 4 agencé pour guider une partie du tuyau d'alimentation 5 entre l'enrouleur 2 et le sol. Le bras de déport est agencé pour disposer le tuyau d'alimentation en dehors de la voie définie par les moyens de déplacement, par exemple des roues, et/ou de la largeur du châssis et/ou de l'envergure du système de distribution.

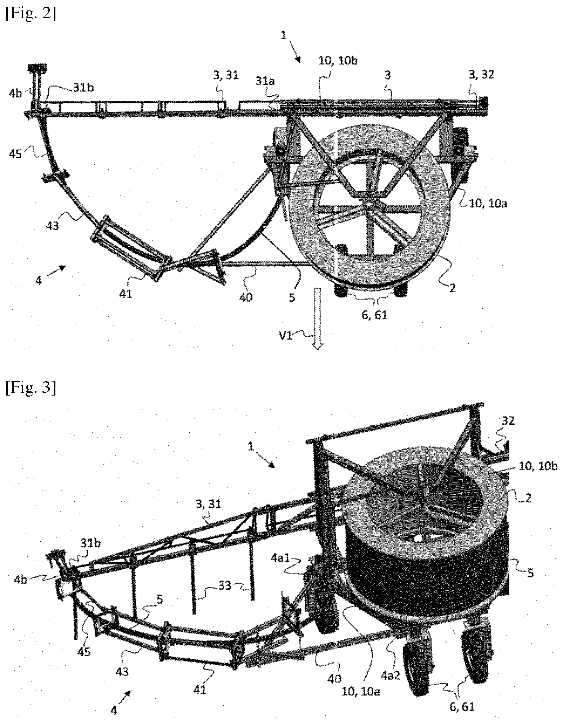

Le châssis de support est agencé pour porter les éléments permettant de réaliser l'arrosage ou plus généralement la distribution d'eau ou d'une solution comprenant de l'eau. Selon le mode de réalisation représenté aux figures 2 et 3, le châssis de support 10 comprend une base 10a en forme de quadrilatère, en particulier en forme de trapèze, et est composée de poutres. Selon d'autres modes de réalisation, le châssis peut être de forme rectangulaire.

La base 10a du châssis est prévue pour se trouver dans une position sensiblement parallèle au sol, par exemple horizontale sur un sol ne présentant aucune inclinaison. L'enrouleur 2 repose sur la base 10a du châssis. Les moyens de déplacement, en particulier les roues 61, sont reliés à la base 10a du châssis de support. Le châssis de support 10 comprend une structure 10b faisant saillie depuis la base 10a. En référence aux figures 2 et 3, la structure 10b comprend deux poutres verticales espacées l'une de l'autre et faisant depuis la base 10a du châssis. En référence à la figure 3, la structure 10b porte le système de distribution d'eau 3. En outre, la structure 10b comprend deux barres de maintien de l'axe de rotation de l'enrouleur 2. Chaque barre s'étend depuis une poutre verticale de la structure jusqu'à l'axe de rotation de l'enrouleur 2.

Les moyens de déplacement 6 comprennent, selon le mode de réalisation représenté, quatre roues 61 dont deux roues avant et deux roues arrière, la voie des roues avant étant inférieure à la voie des roues arrière. De préférence, les roues arrière sont motrices et les roues avant sont directrices. Selon une variante de réalisation, les roues avant peuvent être également motrices. Selon un exemple de réalisation, les moyens de déplacement comprennent un moteur par roue motrice. Les moyens de déplacement comprennent des moyens de direction mécanique, mais qui ne sont pas visibles sur les figures.

Le système de distribution d'eau 3 comprend une armature de distribution d'eau s'étendant de part et d'autre du châssis de support 10. En particulier vu de face comme la figure 1 ou vu de dessus comme la figure 2, l'armature de distribution d'eau comprend deux sections d'armature, une première section d'armature 31 et une deuxième section d'armature 32, la première section 31 s'étendant à gauche des figures 1 et 2 et à droite de la direction de déplacement illustrée par une flèche V1 pointant vers le bas de la figure 2. En référence aux figures 2 à 5, l'armature de distribution d'eau 3 s'étend de manière rectiligne.

Selon un mode de réalisation représenté à la figure 5, l'armature de distribution d'eau 3 s'étend de manière symétrique par rapport au châssis du dispositif d'irrigation 1. La première section d'armature 31 présente une longueur identique à la longueur de la deuxième section d'armature 32. Par exemple en référence à la figure 2, la longueur de la première section d'armature 31 correspond à la distance entre l'extrémité 31a relié à la poutre verticale de la structure 10b du châssis d'une part, et l'extrémité distale 31b. Par exemple, la première et la deuxième sections mesurent entre 4 et 6 mètres, de préférence 5 mètres, de manière préférentielle 5,4 mètres.

Selon un autre mode de réalisation représenté à la figure 1, l'armature de distribution d'eau 3 est disposée de manière dissymétrique par rapport au châssis 10. La distance de l'extrémité distale 31b de la première section 31 par rapport au châssis 10, dite distance de première section, est inférieure à la distance de l'extrémité distale 32b de la deuxième section 32 par rapport au châssis 10. Par exemple, la première section mesure entre 3 et 4 mètres, de préférence 3,6 mètres et la deuxième section mesure entre 6 et 8 mètres, de préférence 7,2 mètres.

L'armature de distribution d'eau comprend en outre des extensions verticales 33 agencées pour distribuer l'eau à quelques centimètres du sol ou directement sur le sol du terrain agricole. Les extensions verticales sont espacées d'une distance sensiblement égale à la distance entre deux sillons (non représentés) du terrain agricole.

En référence aux figures 1 à 4, l'enrouleur 2 du tuyau d'alimentation 5 présentant un axe de rotation 2a sensiblement vertical. De préférence, l'enrouleur 2 présente la forme d'un corps cylindrique dont la circonférence est délimitée axialement par deux couronnes s'étendant radialement. L'enrouleur 2 est agencé pour stocker le tuyau d'alimentation 5. Le dispositif d'irrigation peut en outre comprendre un système de trancanage pour répartir le tuyau d'alimentation le long de la circonférence de l'enrouleur.

En référence aux figures 1 à 4, le bras de déport 4 fait saillie latéralement du châssis, en particulier de la base 10a du châssis, et s'étend dans une direction formant un angle non-nul par rapport à la direction de déplacement (V1 en référence à la figure 2) de manière à disposer le tuyau d'alimentation au moins à l'aplomb de l'extrémité distale 31b de l'armature de distribution 3.

En référence à la figure 3, le bras de déport comprend deux extrémités proximales 4a1, 4a2 raccordées à la base 10a du châssis 10, et une extrémité distale 4b située en porte-à-faux aux roues 61. Selon le mode de réalisation représenté, tout le bras de déport, ou toutes les pièces du bras de déport se situent en porte-à-faux par rapport au châssis 10.

Le bras de déport 4 comprend un segment fixe 40 composé de deux poutres s'étendant sensiblement horizontalement depuis la base 10a et se rejoignant en un point, voir figures 2 et 3. Le segment fixe 40 comprend en outre un premier cadre 42 à travers lequel le tuyau d'alimentation peut être inséré. Le bras comprend en outre trois segments articulés 41, 43, 45 les uns à la suite des autres. Selon un mode de réalisation, chaque segment articulé comprend un cadre et au moins deux tiges, les au moins deux tiges étant raccordées au cadre par l'intermédiaire d'une première extrémité, et étant reliées au segment précédent par l'intermédiaire d'une seconde extrémité, opposée à la première. Les cadres des segments articulés sont également agencés pour être traversés par le tuyau d'alimentation. La pluralité de cadre permet de porter et guider le tuyau d'alimentation 5 depuis l'enrouleur vers le sol lors du déroulement de l'enrouleur 2 et de l'éloignement du dispositif d'irrigation 1 par rapport à la source d'eau.

Selon le mode de réalisation décrit et en référence à la figure 4, le bras de déport 4 comprend quatre cadres 42, 44, 46 et 48. Le segment 41, portant le cadre 44, est relié au premier cadre 42. Le segment 43, portant le cadre 46, est relié au cadre 44. Le segment 45, portant le cadre 48, est relié au cadre 46. Par exemple chaque cadre présente une forme rectangulaire. De préférence, chaque segment articulé est raccordé à un segment précédent par l'intermédiaire d'une liaison pivot d'axe réalisée entre les secondes extrémités des tiges dudit segment articulé et le cadre du segment précédent. De manière préférentielle, l'axe des liaisons pivot est vertical. En outre, chaque cadre comprend des rouleaux montés libre en rotation dans l'espace délimité par chaque cadre. Par exemple, chaque cadre comprend quatre rouleaux montés libre en rotation.

De manière optionnelle et en référence à la figure 4, le dispositif d'irrigation comprend une butée 35 de bras de déport. La butée 35 est disposée à l'extrémité distale 31b de l'armature de distribution 3. La butée 35 est agencée pour réaliser une mise en position de l'extrémité distale 4b du bras de déport. Selon le mode de réalisation représenté, une extension verticale s'étend depuis l'extrémité distale 31b de l'armature. Le tuyau d'alimentation est déposé dans un sillon arrosé. Selon un autre exemple, le tuyau d'alimentation est déposé dans le sillon voisin du dernier sillon arrosé.

Selon des variantes de réalisation non visibles sur les figures, le bras de déport comprend des moyens de débattement angulaire selon un arc de cercle prédéterminé associés à au moins un segment articulé.

Selon une première variante, la liaison pivot d'axe vertical, entre un cadre d'un segment et les tiges du segment voisin, comprend des moyens de butée en pivotement espacés selon un arc de cercle d'un angle prédéterminé. Selon un exemple de réalisation, le cadre et/ou une ou deux desdites tiges présentent des ergots ou taquets.

Selon une deuxième variante de réalisation, le bras de déport comprend au moins un vérin de pivotement relié à un segment articulé.

Selon un troisième mode de réalisation, le bras de déport comprend un agencement de câbles et poulies. Par exemple, chaque segment articulé comprend au moins deux poulies, une poulie d'actionnement reliée à un système d'actionnement, et une poulie réceptrice reliée à l'arbre de pivotement du segment articulé. La poulie d'actionnement permet de mettre en pivotement le segment articulé par l'intermédiaire du câble reliant ladite poulie d'actionnement à la poulie réceptrice.

De préférence, le dispositif d'irrigation automobile comprend des batteries (non représentées) et un système générateur d'électricité 70 de manière à accroître l'autonomie dudit dispositif. Selon le mode de réalisation représenté, le système générateur d'électricité 70 comprend une turbine 71, un moteur thermique 72, un alternateur 73, et un système de transmission de rotation 74 entre la turbine et l'alternateur et entre le moteur thermique et l'alternateur, de manière à recharger les batteries.

La turbine 71 comprend un arbre de turbine s'étendant selon un axe de turbine T et une poulie de turbine 81 montée sur l'arbre de turbine. Le moteur thermique 72 comprend un arbre moteur s'étendant selon un axe de moteur M et une poulie de moteur 82 montée sur l'arbre de moteur M. L'alternateur 73 comprend un arbre d'alternateur s'étendant selon un axe d'alternateur A et deux poulies d'alternateur débrayables 83a et 83b montées de manière coaxiale sur l'arbre d'alternateur.

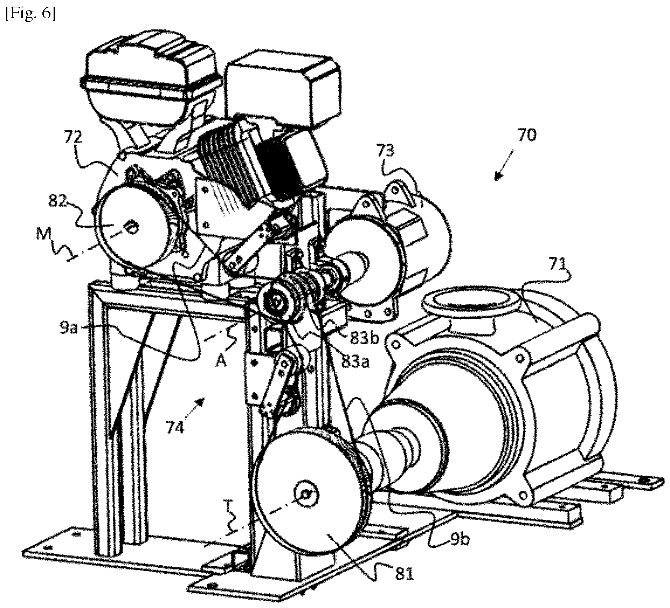

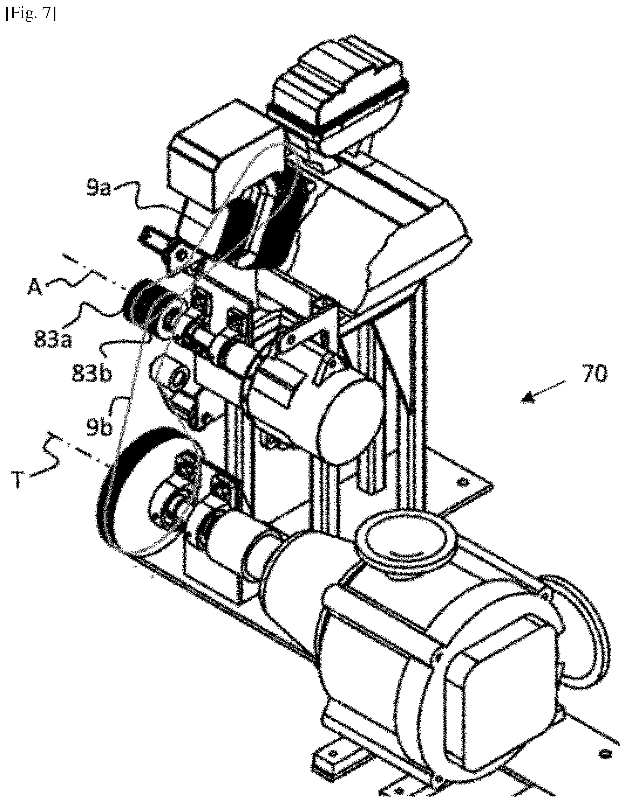

Selon le mode de réalisation représenté, les trois axes de turbine T, de moteur M et d'alternateur A sont parallèles. Le système générateur d'électricité 70 comprend une courroie 9a reliant la poulie de moteur 82 à la poulie d'alternateur 83a et une courroie 9b reliant la poulie de turbine 81 à la poulie d'alternateur 83b, voir figures 6 et 7.

Les poulies de moteur et de turbine sont plus grandes et sont en prise dans les deux sens de rotation (poulies classiques), les poulies sur l'arbre de l'alternateur sont plus petites et sont en prise dans le sens de rotation de l'alternateur, chaque poulie d'alternateur comprenant des moyens d'accouplement et/ou de transmission de mouvement dans le sens rotation de l'alternateur mais libre dans le sens inverse. Ainsi le moteur peut actionner l'alternateur sans actionner la turbine et inversement, la turbine peut actionner l'alternateur sans actionner le moteur.

On va maintenant décrire un procédé d'irrigation d'un terrain agricole en référence à la figure 5.

Au départ, le tuyau d'alimentation 5 du dispositif d'irrigation automobile 1 est raccordé à la source d'eau 200 disposée en bordure d'un terrain agricole 100.

Grâce à des moyens de contrôle, notamment des capteurs et moyens informatiques, et en référence à la partie 1 de la figure 5, le dispositif d'irrigation 1 se dirige en suivant les sillons du terrain agricole le long d'un premier chemin, dit aller, selon une première direction de déplacement V1 en distribuant l'eau ou la solution à base d'eau. De manière simultanée, le dispositif 1 déroule le tuyau d'alimentation 5 au fur et à mesure de l'éloignement par rapport à la source d'eau de manière à le déposer au sol selon une direction de tuyau VT parallèle à la première direction de déplacement V1. Le tuyau d'alimentation est déposé sensiblement à l'aplomb de l'extrémité distale 31b de l'armature de distribution 3, via le bras de déport. L'extrémité distale du bras de déport est par exemple disposée en buté contre l'extrémité distale 31b de l'armature de distribution. Le bras de déport s'étend latéralement et en porte-à-faux depuis le châssis et le roues du côté droit du dispositif. Le bras de déport présente la forme d'un arc de cercle du fait de la présence de segments articulés. Le bras de déport s'étend de manière que l'extrémité distale du bras de déport se situe près de l'extrémité distale de l'armature de distribution d'eau 3. L'extrémité distale du bras de déport est orientée vers l'arrière.

En référence à la partie 2 de la figure 5, le dispositif d'irrigation 1 poursuit son chemin selon la direction de déplacement V1 jusqu'à un point prédéterminé. Par exemple, le point déterminé est l'extrémité du terrain, en particulier des sillons comme sur la partie 2 de la figure 5, ou un obstacle. Le dispositif fait demi-tour autour en maintenant sur place la partie du tuyau d'alimentation 5 posée au sol, la partie 2 de la figure 5 montrant le dispositif 1 à la moitié du demi-tour. Lors du demi-tour, le bras de déport présente un rayon de courbure qui peut s'agrandir. Selon un exemple de réalisation, le bras de déport peut être sensiblement parallèle à la direction de tuyau VT à mi-parcours du demi-tour. Pendant le demi-tour, le dispositif d'irrigation cesse la distribution d'eau. Le système de distribution peut en outre être relevé.

Une fois le demi-tour effectué, le dispositif se dirige le long d'un deuxième chemin, dit retour, selon une deuxième direction de déplacement V2 qui est distincte et parallèle à la première direction de déplacement, en poursuivant la distribution d'eau ou d'une solution à base d'eau, voir partie 3 de la figure 5. Le deuxième chemin est adjacent au premier chemin. De préférence, le deuxième chemin est mitoyen au premier chemin. Lors du parcours selon la deuxième direction de déplacement, le tuyau d'alimentation 5 est enroulé autour de l'enrouleur 2. Le dispositif d'irrigation 1 poursuit son chemin selon direction de déplacement V2 jusqu'à un second point déterminé correspondant à l'extrémité des sillons du terrain agricole 100. Le bras de déport présente la forme d'un arc de cercle. Les segments articulés ont pivoté dans le sens inverse au sens précédent de manière que l'extrémité distale du bras de déport est orientée vers l'avant.

Le dispositif d'irrigation automobile 1 peut ensuite se repositionner pour irriguer une autre parcelle contigüe à celle qui vient d'être irriguée.

L'invention est décrite dans ce qui précède à titre d'exemple. Il est entendu que l'homme du métier est à même de réaliser différentes variantes de réalisation de l'invention sans pour autant sortir du cadre de 1 invention telle que définie dans les revendications annexées.

## Revendications

1. Dispositif d'irrigation automobile (1) pour parcourir un terrain agricole (100) depuis une source d'eau fixe (200), le dispositif comprenant :
- un châssis (10) de support,
- des moyens de déplacement (6) reliés au châssis pour déplacer ledit dispositif sur le terrain agricole selon une direction de déplacement (V1, V2),
- un système de distribution (3) d'eau,
- un tuyau d'alimentation (5) raccordant la source d'eau fixe au système de distribution,
- un enrouleur (2) disposé sur le châssis, l'enrouleur étant agencé pour recevoir et stocker le tuyau d'alimentation,
- des moyens de déroulement et d'enroulement reliés à l'enrouleur de manière à dérouler et enrouler ledit tuyau d'alimentation,
**caractérisé en ce qu'**il comprend un bras de déport (4) incliné depuis le châssis vers le sol et agencé pour guider une partie du tuyau d'alimentation (5) entre l'enrouleur et vers le sol de manière à déposer le tuyau d'alimentation au sol, le bras de déport comprenant une extrémité proximale (4a) raccordée au châssis (10), et une extrémité distale (4b) située en porte-à-faux latéral par rapport à la direction de déplacement (V1, V2) et par rapport aux moyens de déplacement (6).

2. Dispositif d'irrigation automobile (1) selon la revendication 1 dans lequel le bras de déport (4) fait saillie latéralement depuis le châssis (10) et comprend au moins un segment articulé (41, 43, 45) par rapport au châssis, chaque segment comprenant au moins un cadre (42, 44, 46) délimitant un espace dans lequel est inséré le tuyau d'alimentation (5).

3. Dispositif d'irrigation automobile (1) selon la revendication 1 dans lequel le bras de déport (4) fait saillie latéralement depuis le châssis (10) et comprend un segment fixe (40) relié et faisant saillie latéralement au châssis et au moins un segment articulé (41, 43, 45) par rapport au segment fixe, chaque segment comprenant au moins un cadre (42, 44, 46) délimitant un espace dans lequel est inséré le tuyau d'alimentation (5).

4. Dispositif d'irrigation automobile (1) selon l'une des revendications précédentes dans lequel le système de distribution d'eau est une armature de distribution d'eau (3) s'étendant au moins d'un côté latéral du châssis (10), l'armature présentant une extrémité distale d'armature se situant à une distance non-nulle du châssis (10).

5. Dispositif d'irrigation automobile (1) selon l'une des revendications précédentes dans lequel le système de distribution d'eau est une armature de distribution d'eau (3) s'étendant de chaque côté latéral du châssis (10), l'armature présentant deux extrémités distales (31b, 32b) d'armature de manière que chaque extrémité distale de l'armature se situent à une distance non-nulle, dite distance d'armature, du châssis (10), et le bras de déport (4) fait saillie du châssis et s'étend latéralement d'un côté du châssis de manière que l'extrémité distale (4b) dudit bras de déport (4) se situe à une distance supérieure ou égale par rapport à la distance d'armature.

6. Dispositif d'irrigation automobile (1) selon l'une des revendications 1 à 4 dans lequel le système de distribution d'eau est une armature de distribution d'eau (3) s'étendant de chaque côté latéral du châssis (10), l'armature comprenant deux sections, une première section (31) et une deuxième section (32), chaque section présentant une extrémité distale (31b, 32b) d'armature située à une distance non-nulle du châssis (10) de manière que la distance de l'extrémité distale (31b) de la première section (31) par rapport au châssis (10), dite distance de première section, est inférieure à la distance de l'extrémité distale (32b) de la deuxième section (32) par rapport au châssis (10), et dans lequel le bras de déport (4) fait saillie du châssis et s'étend latéralement d'un côté du châssis présentant la première section (31) de l'armature et de manière que l'extrémité distale (4b) dudit bras de déport (4) se situe à une distance supérieure ou égale par rapport à la distance de première section.

7. Dispositif d'irrigation automobile (1) selon la revendication 5 ou 6 dans lequel au moins une extrémité distale d'armature comprend une butée de bras de déport.

8. Dispositif d'irrigation automobile (1) selon l'une des revendications précédentes dans lequel l'enrouleur (2) présente un axe d'enroulement vertical.

9. Dispositif d'irrigation automobile (1) selon l'une des revendications précédentes dans lequel les moyens de déplacement (6) comprennent au moins trois roues (61, 62, 63), ou au moins deux chenilles, des moyens de propulsion et de direction, des moyens de contrôle indépendant de la propulsion et de la direction afin de maintenir, en utilisation, une trajectoire prédéterminée.

10. Dispositif d'irrigation automobile (1) selon l'une des revendications précédentes comprenant en outre des batteries permettant de stocker une quantité d'énergie électrique, et un système générateur d'électricité comprenant au moins une turbine, au moins un moteur thermique, un alternateur, et un système de transmission de rotation entre l'au moins une turbine, l'au moins un moteur thermique et l'alternateur, de manière à recharger les batteries.

11. Dispositif d'irrigation automobile (1) selon la revendication précédente dans lequel le système de transmission de rotation est un système de poulies courroies commun comprenant au moins une poulie de turbine, au moins une poulie de moteur, au moins deux poulies d'alternateur, au moins une première poulie d'alternateur étant reliée à au moins une poulie de turbine et au moins une deuxième poulie d'alternateur étant reliée à au moins une poulie de moteur, chaque poulie d'alternateur étant montée sur l'arbre d'alternateur, le système de transmission comprenant en outre au moins un système d'accouplement sélectif des au moins deux poulies d'alternateur de manière que l'au moins une première poulie d'alternateur ou l'au moins une deuxième poulie d'alternateur soit agencée pour entraîner en rotation l'alternateur.

12. Dispositif d'irrigation automobile (1) selon l'une des revendications précédentes comprenant en outre au moins un capteur de terrain agencé pour mesurer l'état du terrain agricole ou détecter des anomalies.

13. Procédé d'irrigation d'un terrain agricole en utilisant un dispositif d'irrigation automobile (1) selon l'une des revendications précédentes comprenant, le procédé comprenant les étapes suivantes :
- diriger jusqu'à un point prédéterminé le dispositif le long d'un premier chemin, dit aller, selon une première direction de déplacement (V1) et dérouler le tuyau d'alimentation (5) de manière à le déposer au sol selon une direction de tuyau (VT) parallèle à la première direction et espacé d'une distance latérale non-nulle par rapport au moyens de déplacement, via le bras de déport,
- faire demi-tour au dispositif en maintenant la partie du tuyau d'alimentation posée au sol sur place, puis
- diriger le dispositif le long d'un deuxième chemin, dit retour, selon une deuxième direction de déplacement (V2) qui est distincte et parallèle à la première direction de déplacement, et enrouler le tuyau d'alimentation.

14. Procédé selon la revendication précédente, comprenant en outre les étapes suivantes :
- mesurer ou détecter l'état du terrain agricole, en particulier l'état des cultures et/ou la présence de nuisibles, via au moins un capteur de terrain, et
- distribuer au moins un produit ou au moins une solution de traitement dans le système de distribution (3) d'eau lors du déplacement.

## Patentansprüche

1. Selbstfahrende Bewässerungsvorrichtung (1) zum Durchfahren eines landwirtschaftlichen Geländes (100) von einer ortsfesten Wasserquelle (200), die Vorrichtung umfassend:
- ein tragendes Fahrgestell (10),
- Bewegungsmittel (6), die mit dem Fahrgestell verbunden sind, zum Bewegen der Vorrichtung auf dem landwirtschaftlichen Gelände in eine Bewegungsrichtung (V1, V2),
- ein Wasserverteilungssystem (3),
- einen Versorgungsschlauch (5), der die ortsfeste Wasserquelle an das Verteilungssystem anschließt,
- eine Aufrolleinrichtung (2), die auf dem Fahrgestell angeordnet ist, wobei die Aufrolleinrichtung zum Aufnehmen und Speichern des Versorgungsschlauchs angepasst ist,
- Abroll- und Aufrollmittel, die mit der Aufrolleinrichtung verbunden sind, um den Versorgungsschlauch abzurollen und aufzurollen,
**dadurch gekennzeichnet, dass** sie einen Verlagerungsarm (4) umfasst, der von dem Fahrgestell zu dem Boden geneigt ist und zum Führen eines Teils des Versorgungsschlauchs (5) zwischen der Aufrolleinrichtung und zu dem Boden angeordnet ist, um den Versorgungsschlauch auf dem Boden abzulegen, der Verlagerungsarm umfassend ein proximales Ende (4a), das an das Fahrgestell (10) angeschlossen ist, und ein distales Ende (4b), das sich seitlich auskragend relativ zu der Bewegungsrichtung (V1, V2) und relativ zu den Bewegungsmitteln (6) befindet.

2. Selbstfahrende Bewässerungsvorrichtung (1) nach Anspruch 1, wobei der Verlagerungsarm (4) seitlich von dem Fahrgestell (10) hervorsteht und mindestens ein relativ zu dem Fahrgestell gelenkiges Segment (41, 43, 45) umfasst, jedes Segment umfassend mindestens einen Rahmen (42, 44, 46), der einen Raum abgrenzt, in den der Versorgungsschlauch (5) eingeführt ist.

3. Selbstfahrende Bewässerungsvorrichtung (1) nach Anspruch 1, wobei der Verlagerungsarm (4) seitlich von dem Fahrgestell (10) hervorsteht und ein ortsfestes Segment (40), das mit dem Fahrgestell verbunden ist und seitlich davon hervorsteht, und mindestens ein relativ zu dem ortsfesten Segment gelenkiges Segment (41, 43, 45) umfasst, jedes Segment umfassend mindestens einen Rahmen (42, 44, 46), der einen Raum abgrenzt, in den der Versorgungsschlauch (5) eingeführt ist.

4. Selbstfahrende Bewässerungsvorrichtung (1) nach einem der vorstehenden Ansprüche, wobei das Wasserverteilungssystem eine Wasserverteilungsarmatur (3) ist, die sich mindestens von einer seitlichen Seite des Fahrgestells (10) erstreckt, wobei die Armatur ein distales Armaturende aufweist, das sich in einem von null verschiedenen Abstand von dem Fahrgestell (10) befindet.

5. Selbstfahrende Bewässerungsvorrichtung (1) nach einem der vorstehenden Ansprüche, wobei das Wasserverteilungssystem eine Wasserverteilungsarmatur (3) ist, die sich von jeder seitlichen Seite des Fahrgestells (10) erstreckt, wobei die Armatur zwei distale Armaturenden (31b, 32b) aufweist, so dass sich jedes distale Armaturende in einem von null verschiedenen Abstand, genannt Armaturabstand, von dem Fahrgestell (10) befindet, und der Verlagerungsarm (4) von dem Fahrgestell hervorsteht und sich seitlich von einer Seite des Fahrgestells erstreckt, so dass sich das distale Ende (4b) des Verlagerungsarms (4) in einem Abstand befindet, der größer als oder gleich dem Armaturabstand ist.

6. Selbstfahrende Bewässerungsvorrichtung (1) nach einem der Ansprüche 1 bis 4, wobei das Wasserverteilungssystem eine Wasserverteilungsarmatur (3) ist, die sich von jeder seitlichen Seite des Fahrgestells (10) erstreckt, die Armatur umfassend zwei Abschnitte, einen ersten Abschnitt (31) und einen zweiten Abschnitt (32), wobei jeder Abschnitt ein distales Armaturende (31b, 32b) aufweist, das sich in einem von null verschiedenen Abstand von dem Fahrgestell (10) befindet, so dass der Abstand des distalen Endes (31b) des ersten Abschnitts (31) zu dem Fahrgestell (10), genannt Abstand des ersten Abschnitts, geringer als der Abstand des distalen Endes (32b) des zweiten Abschnitts (32) zu dem Fahrgestell (10) ist, und wobei der Verlagerungsarm (4) von dem Fahrgestell hervorsteht und sich seitlich von einer Seite des Fahrgestells, die den ersten Abschnitt (31) der Armatur aufweist, und so erstreckt, dass sich das distale Ende (4b) des Verlagerungsarms (4) in einem Abstand befindet, der größer als oder gleich dem Abstand des ersten Abschnitts ist.

7. Selbstfahrende Bewässerungsvorrichtung (1) nach Anspruch 5 oder 6, wobei mindestens ein distales Armaturende einen Verlagerungsarmanschlag umfasst.

8. Selbstfahrende Bewässerungsvorrichtung (1) nach einem der vorstehenden Ansprüche, wobei die Aufrolleinrichtung (2) eine vertikale Aufrollachse aufweist.

9. Selbstfahrende Bewässerungsvorrichtung (1) nach einem der vorstehenden Ansprüche, wobei die Bewegungsmittel (6) mindestens drei Räder (61, 62, 63) oder mindestens zwei Raupenketten, Antriebs- und Lenkmittel, Mittel für eine unabhängige Steuerung des Antriebs und der Lenkung umfassen, um in Verwendung eine zuvor bestimmte Bahn beizubehalten.

10. Selbstfahrende Bewässerungsvorrichtung (1) nach einem der vorstehenden Ansprüche, ferner umfassend Batterien, die es ermöglichen, eine Menge elektrischer Energie zu speichern, und ein Stromerzeugungssystem, umfassend mindestens eine Turbine, mindestens einen Wärmemotor, einen Wechselstromgenerator und ein Rotationsübertragungssystem zwischen der mindestens einen Turbine, dem mindestens einen Wärmemotor und dem Wechselstromgenerator, um die Batterien aufzuladen.

11. Selbstfahrende Bewässerungsvorrichtung (1) nach dem vorstehenden Anspruch, wobei das Rotationsübertragungssystem ein gemeinsames Riemenscheibensystem ist, umfassend mindestens eine Turbinenscheibe, mindestens eine Motorscheibe, mindestens zwei Generatorscheiben, wobei mindestens eine erste Generatorscheibe mit mindestens einer Turbinenscheibe verbunden ist und mindestens eine zweite Generatorscheibe mit mindestens einer Motorscheibe verbunden ist, wobei jede Generatorscheibe auf der Generatorwelle montiert ist, das Übertragungssystem umfassend ferner mindestens ein System für eine selektive Kopplung der mindestens zwei Generatorscheiben, so dass die mindestens eine erste Generatorscheibe oder die mindestens eine zweite Generatorscheibe zum rotierenden Antreiben des Generators angepasst ist.

12. Selbstfahrende Bewässerungsvorrichtung (1) nach einem der vorstehenden Ansprüche, ferner umfassend mindestens einen Geländesensor, der zum Messen des Zustands des landwirtschaftlichen Geländes oder Erfassen von Anomalien angeordnet ist.

13. Verfahren zum Bewässern eines landwirtschaftlichen Geländes unter Verwendung einer selbstfahrenden Bewässerungsvorrichtung (1) nach einem der vorstehenden Ansprüche, das Verfahren umfassend die folgenden Schritte:
- Leiten der Vorrichtung entlang eines ersten Weges, genannt Hinweg, bis zu einem zuvor bestimmten Punkt in eine erste Bewegungsrichtung (VI) und Abrollen des Versorgungsschlauchs (5), um es auf dem Boden in eine Schlauchrichtung (VT) parallel zu der ersten Richtung und in einem seitlichen Abstand ungleich null zu den Bewegungsmitteln über den Verlagerungsarm abzulegen,
- Wenden der Vorrichtung während der Teil des Versorgungsschlauchs, der auf dem Boden liegt, an Ort und Stelle beibehalten wird, dann
- Leiten der Vorrichtung entlang eines zweiten Weges, genannt Rückweg, in eine zweite Bewegungsrichtung (V2), die von der ersten Bewegungsrichtung verschieden und parallel dazu ist, und Aufwickeln des Versorgungsschlauchs.

14. Verfahren nach dem vorstehenden Anspruch, ferner umfassend die folgenden Schritte:
- Messen oder Erfassen des Zustands des landwirtschaftlichen Geländes, insbesondere des Zustands der Kulturen und/oder der Anwesenheit von Schädlingen, über mindestens einen Geländesensor, und
- Verteilen mindestens eines Produkts oder mindestens einer Behandlungslösung in dem Wasserverteilungssystem (3) während der Bewegung.

## Claims

1. Automotive irrigation device (1) for traveling over an agricultural terrain (100) from a fixed water source (200), the device comprising:
- a support chassis (10),
- movement means (6) connected to the chassis for moving said device over the agricultural terrain in a movement direction (V1, V2),
- a water distribution system (3),
- a feed hose (5) connecting the fixed water source to the distribution system,
- a reel (2) disposed on the chassis, the reel being arranged to receive and store the feed hose,
- unwinding and winding means connected to the reel for unwinding and winding said feed hose,
**characterized in that** said device comprises an offset arm (4) inclined from the chassis toward the ground and arranged to guide a part of the feed hose (5) between the reel and toward the ground so as to put the feed hose on the ground, the offset arm comprising a proximal end (4a) connected to the chassis (10), and a distal end (4b) located laterally cantilevered relative to the movement direction (V1, V2) and relative to the movement means (6).

2. Automotive irrigation device (1) according to claim 1, wherein the offset arm (4) projects laterally from the chassis (10) and comprises at least one articulated segment (41, 43, 45) relative to the chassis, each segment comprising at least one frame (42, 44, 46) delimiting a space into which the feed hose (5) is inserted.

3. Automotive irrigation device (1) according to claim 1, wherein the offset arm (4) projects laterally from the chassis (10) and comprises a fixed segment (40) connected and projecting laterally to the chassis, and at least one articulated segment (41, 43, 45) relative to the fixed segment, each segment comprising at least one frame (42, 44, 46) delimiting a space into which the feed hose (5) is inserted.

4. Automotive irrigation device (1) according to any of the preceding claims, wherein the water distribution system is a water distribution framework (3) extending at least from one lateral side of the chassis (10), the framework having a framework distal end located at a non-zero distance from the chassis (10).

5. Automotive irrigation device (1) according to any of the preceding claims, wherein the water distribution system is a water distribution framework (3) extending from each lateral side of the chassis (10), the framework having two framework distal ends (31b, 32b) such that each framework distal end is located at a non-zero distance, called the framework distance, from the chassis (10), and the offset arm (4) projects from the chassis and extends laterally from one side of the chassis such that the distal end (4b) of said offset arm (4) is located at a greater or equal distance relative to the framework distance.

6. Automotive irrigation device (1) according to any of claims 1 to 4, wherein the water distribution system is a water distribution framework (3) extending from each lateral side of the chassis (10), the framework comprising two portions, namely a first portion (31) and a second portion (32), each portion having a framework distal end (31b, 32b) located at a non-zero distance from the chassis (10) such that the distance of the distal end (31b) of the first portion (31) relative to the chassis (10), called the first portion distance, is less than the distance of the distal end (32b) of the second portion (32) relative to the chassis (10), and wherein the offset arm (4) projects from the chassis and extends laterally from one side of the chassis having the first portion (31) of the framework and such that the distal end (4b) of said offset arm (4) is located at a greater or equal distance relative to the first portion distance.

7. Automotive irrigation device (1) according to claim 5 or claim 6, wherein at least one framework distal end comprises an offset arm stop.

8. Automotive irrigation device (1) according to any of the preceding claims, wherein the reel (2) has a vertical winding axis.

9. Automotive irrigation device (1) according to any of the preceding claims, wherein the movement means (6) comprise at least three wheels (61, 62, 63), or at least two tracks, propulsion and steering means, independent propulsion and steering control means in order to maintain, while in use, a predetermined trajectory.

10. Automotive irrigation device (1) according to any of the preceding claims, further comprising batteries for storing a quantity of electrical energy, and an electricity generating system comprising at least one turbine, at least one heat engine, an alternator, and a rotary transmission system between the at least one turbine, the at least one heat engine and the alternator, so as to recharge the batteries.

11. Automotive irrigation device (1) according to the preceding claim, wherein the rotary transmission system is a common belt pulley system comprising at least one turbine pulley, at least one engine pulley, at least two alternator pulleys, at least one first alternator pulley being connected to at least one turbine pulley and at least one second alternator pulley being connected to the at least one engine pulley, each alternator pulley being mounted on the alternator shaft, the transmission system further comprising at least one system for selectively coupling the at least two alternator pulleys such that the at least one first alternator pulley or the at least one second alternator pulley is arranged to rotate the alternator.

12. Automotive irrigation device (1) according to any of the preceding claims, further comprising at least one terrain sensor arranged to measure the condition of the agricultural terrain or detect anomalies.

13. Method for irrigating an agricultural terrain, using an automotive irrigation device (1) according to any of the preceding claims, the method comprising the steps of:
- directing the device to a predetermined point along a first path, called the outward path, in a first movement direction (VI) and unwinding the feed hose (5) via the offset arm, so as to put the feed hose on the ground in a hose direction (VT) parallel to the first direction and spaced by a non-zero lateral distance with respect to the movement means,
- turning the device around, holding in place the part of the feed hose lying on the ground, then
- directing the device along a second path, called the return path, in a second movement direction (V2) which is separate from and parallel to the first movement direction, and winding the feed hose.

14. Method according to the preceding claim, further comprising the steps of:
- measuring or detecting the condition of the agricultural terrain, in particular the condition of crops and/or the presence of pests, by means of at least one terrain sensor, and
- distributing at least one product or at least one treatment solution in the water distribution system (3) during the movement.
